# EUROPÄISCHE PATENTSCHRIFT

(11) **EP 3 899 550 B1**
(45) Veröffentlichungstag und Bekanntmachung des Hinweises auf die Patenterteilung: **26.04.2023**
(21) Anmeldenummer: 19813824.0
(22) Anmeldetag: 03.12.2019
(51) Int. Cl.: G01P 1/02, G01P 3/488, B29C 45/14

(54) **INDUKTIVER DREHZAHLSENSOR UND EIN VERFAHREN ZU DESSEN HERSTELLUNG**
INDUCTIVE ROTATIONAL SPEED SENSOR AND METHOD FOR PRODUCING SAME
CAPTEUR DE VITESSE INDUCTIF ET PROCÉDÉ POUR LE FABRIQUER

(30) Priorität: 18.12.2018 DE 102018132709
(43) Veröffentlichungstag der Anmeldung: 27.10.2021
(73) Patentinhaber: KNORR-BREMSE Systeme für Nutzfahrzeuge GmbH, 80809 München (DE)
(72) Erfinder: LECHNER, Klaus, 91362 Pretzfeld (DE); KLUFTINGER, Andre, 63924 Kleinheubach (DE); HUBER, Christoph, 80333 München (DE); FRUHSTORFER, Ines, 94227 Zwiesel (DE); BÜTTNER, Martin, 84367 Tann (DE); PALZER, Stefan, 94496 Ortenburg (DE)
(86) Internationale Anmeldenummer: PCT/EP2019/083502
(87) Internationale Veröffentlichungsnummer: WO 2020/126479

(56) Entgegenhaltungen:
- EP-A2- 1 262 779
- WO-A1-97/36729
- DE-A1- 10 111 980
- US-A- 5 414 355

## Beschreibung

Die vorliegende Erfindung bezieht sich auf einen induktiven Drehzahlsensor und Verfahren zu dessen Herstellung. Die Erfindung bezieht sich insbesondere auf ein Umspritzen von Spulenkörpern, die sowohl für einen axialen induktiven Drehzahlsensor als auch für einen radialen induktiven Drehzahlsensor nutzbar ist.

Passive Drehzahlsensoren werden in der Fahrzeugtechnik, insbesondere bei LKWs genutzt, um Drehgeschwindigkeiten von drehbaren Komponenten zu messen. Zur korrekten Funktionsweise von Antiblockiersystemen ist beispielsweise fortlaufend eine Drehzahl des betreffenden Rades zu ermitteln. Diese Drehzahlsensoren basieren häufig auf einer induktiven Messung einer Drehgeschwindigkeit eines Polrades relativ zu einer Spule. Da dies kontaktlos möglich ist und da außerdem das Magnetfeld ohne Weiteres eine hermetische Versiegelung durchdringen kann, sind solche Sensoren sehr robust gegenüber Umwelteinflüssen, wie sie in Fahrzeuganwendungen typisch sind.

Diese Drehzahlsensoren können als radiale oder axiale Sensoren hergestellt werden. Bei den axialen Drehzahlsensoren wird die elektrische Anschlussleitung axial von dem Drehzahlsensor weggeführt, d.h. parallel zu einer Axialachse, um die die Windungen der Spule verlaufen. Bei radialen Drehzahlsensoren verläuft die elektrische Anschlussleitung in radialer Richtung (senkrecht zur axialen Achse) aus dem Drehzahlsensor heraus.

Bei konventionellen Drehzahlsensoren werden für den radialen bzw. axialen Drehzahlsensor spezifische Spulenkörper und/oder Stromschienen genutzt und durch Umspritzung entsprechend geschützt. Dazu werden sie in einem entsprechenden Umspritzwerkzeug fixiert, um zum Beispiel ein Verdrehen während des Umspritzens zu verhindern. Diese Fixierung erfolgt beispielsweise durch ein Festhalten eines Polkernes des Spulenkörpers, der nach dem Umspritzprozess entsprechend gekürzt wird. Diese Vorgehensweise ist aufwendig und fehleranfällig, da ein zuverlässiger

Verdrehungsschutz über den Polkern nicht immer gewährleistet werden kann.

Außerdem ist das Kürzen des Polkerns ein zusätzlicher Arbeitsschritt. Das Dokument WO 97/36729 A1 offenbart Positionierelemente, die den Spulenkörper während des Umspritzvorgangs fixieren. Weitere Beispiele von Drehzahlsensoren sind zudem in den Dokumenten EP 1 262 779 A2, DE 101 11 980 A1 und US 5 414 355 A offenbart. Daher besteht ein Bedarf nach einem induktiven Sensor, der vereinfacht hergestellt werden kann.

Zumindest ein Teil der obengenannten Probleme wird durch einen induktiven Drehzahlsensor nach Anspruch 1 und ein Verfahren zu dessen Herstellung nach Anspruch 9 gelöst. Die abhängigen Ansprüche definieren weitere vorteilhafte Ausführungsformen der Gegenstände der unabhängigen Ansprüche.

Die vorliegende Erfindung bezieht sich auf einen induktiven Drehzahlsensor. Der Drehzahlsensor umfasst einen Spulenkörper mit einer Spule und Anschlussleitungen, die bezüglich der Spulenwicklungen axial oder radial von dem Spulenkörper weglaufen, und eine Ummantelung aus einem Kunststoffmaterial (z.B. eine Umspritzmasse oder Vergussmasse), die den Spulenkörper zumindest teilweise umschließt. Der Drehzahlsensor umfasst außerdem Fixierungsmittel zum Erleichtern eines Ausbildens der Ummantelung. Die Fixierungsmittel können optional für radial sich erstreckende Anschlussleitungen eine Materialauskernung in der Ummantelung umfassen, um die elektrischen Anschlussleitungen bei dem Ausbilden der Ummantelung in einem Abstand voneinander zu fixieren. Die Fixierungsmittel bilden erfindungsgemäß eine Verdrehsicherung, welche radial über den Spulenkörper hervorsteht. Die Verdrehsicherung ist ausgebildet, um eine Verdrehung des Spulenkörpers beim Ausbilden der Ummantelung relativ zu einem dazu genutzten Werkzeug zu verhindern, wobei die Verdrehsicherung teilweise aus der Ummantelung (radial) herausragt oder sich zumindest bis zu einer äußeren Oberfläche der Ummantelung erstreckt. Zumindest die Verdrehsicherung ist in dem induktiven Drehzahlsensor ausgebildet.

Die Materialauskernung bietet außerdem den Vorteil, dass ein schnelles Auskühlen beim Ausbilden der Ummantelung erreicht wird. Sie kann beispielsweise durch einen Vorsprung oder Stempel in dem Werkzeug erreicht werden. Die Verdrehsicherung kann beispielsweise in eine oder mehrere Vertiefungen/Nuten im Werkzeug eingreifen, um so den Spulenkörper verdrehungssicher im Werkzeug zu halten.

Erfindungsgemäß umfasst die Ummantelung äußere Rippen, die auf einer äußeren Oberfläche ausgebildet sind und für eine Hülsenklemmung einer äußeren Schutzhülse geeignet sind, wobei die Verdrehsicherung ein Teil eines Abschnittes einer Rippe ist. Da die Rippe durch eine Nute im Werkzeug erzeugt wird, führt ein Eingreifen der Verdrehsicherung in die Nute automatisch zu einer Verdrehsicherung. Es sind hier keine Änderungen am Werkzeug erforderlich.

Optional umfasst die Ummantelung zumindest ein Plateau, auf dem beispielsweise zumindest eine Rippe enden kann. Das Plateau kann ausgebildet sein, um eine äußere Schutzhülse mittels einer Verstemmung daran zu fixieren. Daher stellt das Plateau insbesondere einen Vorsprung dar (es ist "erhaben") und kann das gleiche Niveau wie die Verdrehsicherung haben. Die genutzte Verstemmung kann jede Form von lokal plastischer Verformung des Schutzhülse sein, die zu eine Befestigung auf der Ummantelung führt. Auch die Ummantelung kann an der Stelle leicht plastisch verformt werden.

Optional umfasst der induktiver Drehzahlsensor eine Schutzhülse (z.B. aus Metall) mit einer trompetenförmigen Randverbreiterung zum Schutz der Ummantelung. Die Schutzhülse nimmt zumindest teilweise die Ummantelung auf, wobei die trompetenförmige Randverbreiterung zu den Anschlussleitungen zeigt. Optional ist außerdem ein Dichtungs-O-Ring (z. B. an einem äußeren Randbereich) zwischen der Schutzhülse und der Ummantelung ausgebildet, um eine zuverlässige Dichtung zu gewährleisten. Die Trompetenform erleichtert das Überschieben der Schutzhülse über den O-Ring.

Optional umfasst die trompetenförmige Randverbreiterung Befestigungsmittel, um die Schutzhülse und die Ummantelung miteinander oder an dem Werkzeug zu befestigen. Optional kann die Ummantelung dementsprechend einen Vorsprung aufweisen, der mit dem Rasthaken/Bajonettverschluss in Eingriff gelangt, um die Befestigung zu erreichen. Die Befestigungsmittel können beispielsweise einen Rasthaken und/oder ein Bajonett-Verschluss aufweisen, sodass die Schutzhülse einen weiteren Halt auf der Ummantelung bekommt (z.B. zusätzlich zu den Rippen und den Verstemmungen).

Optional umfasst die Ummantelung abgeflachte Flächen, zwischen denen die Anschlussleitungen zu dem Spulenkörper verlaufen, um eine Handhabung während des oder nach dem Ausbilden der Ummantelung zu erleichtern und eine weitere Verdrehsicherung bereitzustellen. Optional umfassen die abgeflachten Flächen eine Beschriftungsfläche (um z. B. darauf eine Beschriftung mittels eines Lasers auszubilden).

Die vorliegende Erfindung bezieht sich auch auf ein Verfahren zur Herstellung eines induktiven Drehzahlsensors, wie sie z.B. zuvor definiert wurden. Das Verfahren umfasst:
- Bereitstellen eines Spulenkörpers mit einer Spule und Anschlussleitungen, die sich bezüglich der Spulenwicklungen axial oder radial erstrecken;
- Ausbilden einer Ummantelung aus einem Kunststoffmaterial (Umspritzmasse, Vergussmasse etc.), die den Spulenkörper zumindest teilweise umschließt; und
- Fixieren zumindest eines Teils des Spulenkörpers während des Ausbildens der der Ummantelung.

Das Fixieren kann optional, für radial sich erstreckende Anschlussleitungen, ein Einführen eines Stempels (oder Vorsprunges) zwischen den elektrischen Anschlussleitungen während des Ausbildens der Ummantelung, um die Anschlussleitungen in einem vorbestimmten Abstand voneinander zu fixieren, umfassen. Das Fixieren umfasst erfindungsgemäß ein Festhalten des Spulenkörpers in einem zum Ausbilden der Ummantelung genutzten Werkzeug unter Nutzung einer Verdrehsicherung, wobei die Verdrehsicherung von dem Spulenkörper in radialer Richtung hervorsteht, um so durch das genutzte Werkzeug gehalten zu werden. Beim Ausbilden der Ummantelung wird die Verdrehsicherung teilweise durch die Ummantelung umschlossen. Dabei werden erfindungsgemäß äußere Rippen ausgebildet, die für eine Hülsenklemmung einer äußeren Schutzhülse geeignet sind, wobei die Verdrehsicherung ein Teil eines Abschnittes einer Rippe ist.

Optional umfasst das Ausbilden der Ummantelung ein Verwenden eines Werkzeuges, das einen linear verschiebbaren Tisch mit zumindest zwei unteren Werkzeugteilen und einem oberen Werkzeugteil aufweist, um ein Bestücken der Spulenkörper durch ein lineares Verschieben zu ermöglichen. Die Begriffe "oben" und "unten" können beispielsweise mittels der Annahme definiert werden, dass eine Flussrichtung des Kunststoffmaterials der Ummantelung von oben nach unten erfolgt.

Der Spulenkörper kann zur elektrischen Kontaktierung der Spule zwei Stromschienen umfassen, die jeweils eine Barriere zwischen einem Drahtanschluss der Spule und einem Kontaktbereich für die elektrische Kontaktierung durch die Anschlussleitungen umfassen. Das Verfahren gemäß Ausführungsbeispielen umfasst dann (als Teil des Ausbildens der Ummantelung) optional ein Umspritzen der Spulenkörpers, wobei das Umspritzen derart ausgeführt wird, dass die Barrieren ein Umlenken einer genutzten Umspritzmasse bei dem Umspritzen bewirken. Um das Umlenken zu bewirken, weisen die Barrieren eine entsprechende Geometrie (Breite, Höhe etc.) auf und sind entsprechend angeordnet (z.B. in der Nähe des Drahtanschlusses der Spule und senkrecht zur Umspritzrichtung). Da beim Umspritzen häufig ein hoher Druck genutzt wird, bieten die Barrieren einen Schutz für die Drahtkontaktierungen zu der Spule (z. B. die entsprechenden Schweißnähte), da der Hauptdruck zunächst durch die Barriere abgefangen wird.

Ausführungsbeispiele der vorliegenden Erfindung lösen zumindest einen Teil der obengenannten technischen Probleme durch die spezifischen Fixierungsmittel, die die Herstellung der induktiven Sensoren erleichtern. Hierzu können einerseits Verdrehsicherungen direkt als Teil des Spulenkörpers ausgebildet werden, um eine Verdrehung während eines beispielhaften Umspritzprozesses zu verhindern. Außerdem erlaubt eine durch einen Stempel/Vorsprung verursachte Materialauskernung für die radiale Variante eine zuverlässige Fixierung der elektrischen Kontakte während des Umspritzprozesses. Da ein Umspritzprozess zu einer hohen mechanischen Belastung der elektrischen Kontaktierungen führt, ist ein zuverlässiger Schutz oder Fixierung der Kontakte wichtig, um die Fehlerrate gering zu halten.

Diese einfache Prozessierung bietet den weiteren Vorteil, dass die Anzahl der erforderlichen Teile deutlich reduziert werden kann, was wiederum zu einer Kostenreduzierung führt.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt einen induktiven Drehzahlsensor nach einem Ausführungsbeispiel der vorliegenden Erfindung.
- Fig. 2A, 2B: veranschaulichen elektrische Kontaktierungen des Spulenkörpers durch die Anschlussleitungen gemäß weiteren Ausführungsbeispielen.
- Fig. 3A, 3B: zeigen das Resultat eines Umspritzprozesses für einen axialen Drehzahlsensor gemäß weiteren Ausführungsbeispielen.
- Fig. 4: zeigt ein Ausführungsbeispiel für eine Schutzhülse des Drehzahlsensors.
- Fig. 5: zeigt eine Querschnittsansicht eines fertiggestellten induktiven Drehzahlsensors in der axialen Bauausführung.

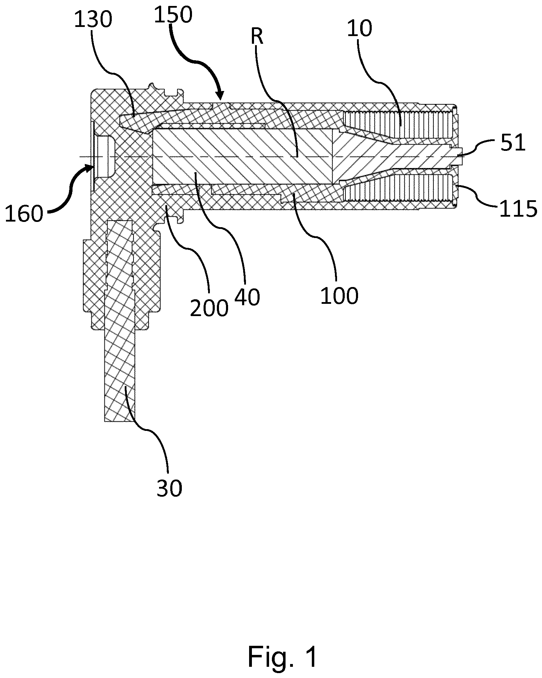

**Fig. 1** zeigt einen induktiven Drehzahlsensor gemäß einem Ausführungsbeispiel der vorliegenden Erfindung. Der Drehzahlsensor umfasst einen Spulenkörper 100 mit einer Spule/Spulenwicklungen 10 um eine axiale Achse R und Anschlussleitungen 30, die bezüglich den Spulenwicklungen 10 sich beispielsweise radial erstrecken (von der Achse R weg). Dieser Drehzahlsensor wird auch als radialer Drehzahlsensor bezeichnet - im Gegensatz zu einem axialen Drehzahlsensor, bei dem die Anschlussleitungen (nahezu) parallel zu der axialen Achse R herausgeführt werden. Der induktive Drehzahlsensor umfasst außerdem eine Ummantelung 200 aus einem Kunststoffmaterial (z.B. einer Umspritzmasse oder Vergussmasse), die den Spulenkörper 100 zumindest teilweise umschließt, um die stromführenden Leitungen vor Feuchtigkeit und anderen Umwelteinflüssen zu schützen.

Außerdem sind in dem induktiven Drehzahlsensor Fixierungsmitteln 150, 160 vorgesehen, die ausgebildet sind, um ein Ausbilden der Ummantelung 200 zu erleichtern. Dazu umfassen die Fixierungsmittel 150, 160 für den gezeigten radialen Sensor eine Materialauskernung 160, die in der Ummantelung ausgebildet ist und in der Lage ist, die elektrischen Anschlussleitungen 30 bei dem Ausbilden der Ummantelung 200 in einem bestimmten Abstand voneinander zu halten. Damit wird eine sichere Isolierung zwischen den beiden Anschlussleitungen gewährleistet - auch wenn durch das Ausbilden der Ummantelung hohe mechanische Belastungen auf die entsprechenden Kontaktierungen ausgeübt werden. Darüber hinaus wird durch die Auskernung 160 eine schnellere Abkühlung nach dem Ausbilden der Ummantelung 200 und somit eine schnellere Herstellung ermöglicht.

Die Fixierungsmittel umfassen erfindungsgemäß Verdrehsicherungen 150, die eine Verdrehung des Spulenkörpers 100 beim Ausbilden der Ummantelung 200 relativ zu einem dazu genutzten Werkzeug verhindern. Die Verdrehsicherung 150 ragt beispielhaft teilweise aus der Ummantelung 200 heraus oder erstreckt sich zumindest bis zu einer Oberfläche der Ummantelung 200, um einen Halt in dem umgebenden Werkzeug zum Ausbilden der Ummantelung zu erreichen.

In dem Spulenkörper 100 befindet sich ein Magnet 40 und ein Polkern 50, der mit seinem stabförmigen Ende 51 aus der Ummantelung 200 bzw. dem Spulenkörper herausragt, um die magnetischen Feldlinien oder deren Änderungen effizient von einem Außengebiet in den Innenraum der Spule 10 zu leiten. Die Spule 10 wird axial in einem Vorderabschnitt durch einen scheibenförmigen Endabschnitt 115 des Spulenkörpers 100 begrenzt, der ein Loch aufweist, durch das sich das stabförmige Ende 51 des Polkerns 50 erstreckt.

Schließlich umfasst der Spulenkörper 100 einen Rasthaken 130, der ausgebildet ist, um den Magneten 40 hinsichtlich einer axialen Verschiebung parallel zur axialen Achse R zu fixieren. Diese Fixierung bietet den Vorteil, dass bei einem Fertigungsfehler vor der weiteren Umspritzung der Magnet 20 und der Polkern 50 entfernt werden kann - oder gar nicht erst gefügt werden. Auf diese Weise werden die Ausschussanteile in der Fertigung minimiert.

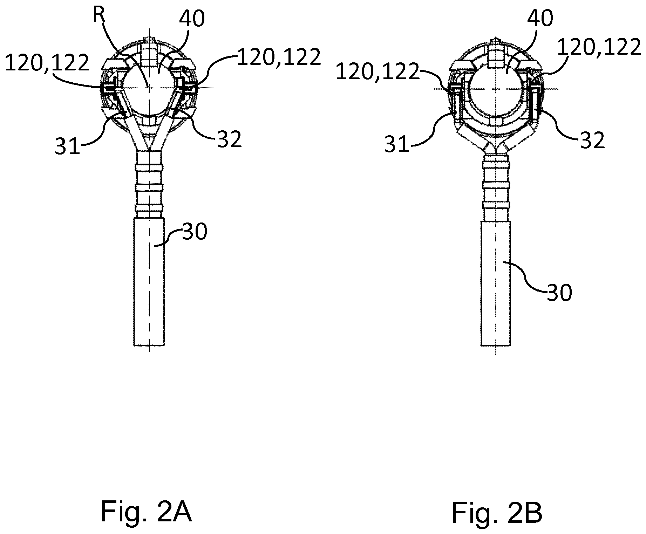

**Fig. 2A** und **2B** zeigen mögliche elektrische Kontaktierungen des Spulenkörpers 100 durch die Anschlussleitungen 30 bzw. den einzelnen Leitungen 31, 32. Bei dem Ausführungsbeispiel der Fig. 2A werden die beiden elektrischen Leitungen 31, 32 Y-förmig zu zwei gegenüberliegenden Stromschienen 120 mit Kontaktabschnitte 122 geführt. Die Fig. 2B zeigt ein Ausführungsbeispiel bei die elektrischen Leitungen 31, 32 U-förmig um den Magneten 40 herumgeführt werden und parallel an den Stromschienen 120 bzw. den Kontaktabschnitten 122 angeschlossen werden.

Die Materialauskernung 160 aus der Fig. 1 wird beispielsweise über einen Stempel erreicht, der in einem beispielhaften Umspritzwerkzeug in axialer Richtung R (in der Fig. 2A, 2B nach unten) verläuft, um die beiden elektrischen Anschlussleitungen 31, 32 bzw. die damit verbundenen Kontaktabschnitte 122 sicher voneinander zu trennen. Da für das beispielhafte Umspritzen ein großer Druck verwendet wird, bietet diese Fixierung Sicherheit, da der Umspritzdruck nicht dazu führen kann, dass die Stromschienen 120 bzw. die Kontaktbereiche 122 beim Umspritzen gegeneinandergedrückt werden und so ein elektrischer Kurzschluss auftreten kann.

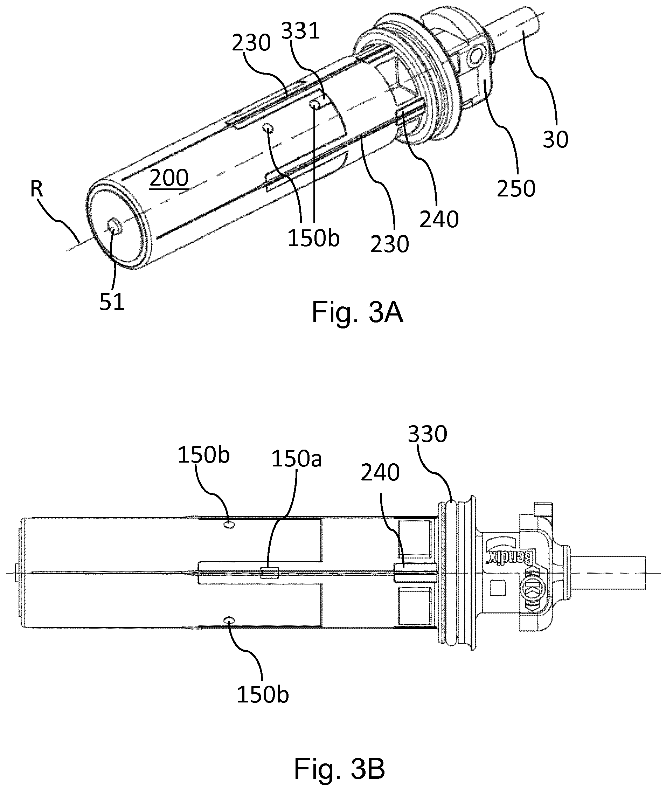

**Fig. 3A** zeigt eine Raumansicht und **Fig. 3B** eine Seitenansicht eines Ausführungsbeispiels für einen axialen induktiven Drehzahlsensor mit der Ummantelung 200 (z.B. nach dem beispielhaften Umspritzprozess). Die ausgebildete Ummantelung 200 umfasst in dem gezeigten Ausführungsbeispiel eine Vielzahl von Rippen 230 (z. B. drei oder vier), die dazu dienen, um anschließend eine Schutzhülse (z.B. eine Metallhülse) auf dem Spulenkörper fest zu fixieren. An der Unterseite der Ummantelung 200 ist ebenfalls das stabförmige Ende 51 des Polkernes 50 (siehe Fig. 1) zu sehen.

Die genutzte Verdrehsicherung 150 ragt zumindest teilweise aus der Ummantelung 200 hinaus oder erstreckt sich zumindest bis zu einer Oberfläche. Die Verdrehsicherungen 150a, 150b können verschiedene Formen von Vorsprüngen umfassen. Beispielsweise können die Verdrehsicherungen 150 pfeilförmige Elemente 150a oder stiftförmige Elemente 150b sein. Die Verdrehsicherung wird durch eine Verankerung oder einen Halt der Verdrehsicherung 150 in dem genutzten beispielhaften Umspritzwerkzeug erreicht. Die pfeilförmigen Elemente 150a sollen erfindungsgemäß Teil der Rippe 230 werden (siehe Fig. 3B) und werden in dem Umspritzwerkzeug in einer Nute gehalten, mit deren Hilfe die Rippe 230 geformt/gegossen wird. Die Verdrehsicherung 150 verhindert somit ein Verdrehen des eingesetzten Spulenkörpers in dem Werkzeug. Optional werden ebenfalls Plateaus 240 als Teil der Ummantelung 200 ausgebildet. Die Plateaus 240 können beispielsweise Endbereiche darstellen, auf denen die Rippen 230 enden. Die Plateaus 240 dienen beispielsweise dazu, um eine Hülse in einem folgenden Verfahrensschritt auf der Ummantelung 200, beispielsweise durch ein Verstemmen, zu fixieren.

Die Vorsprünge 150a, 150b erstrecken sich beispielsweise um zumindest 0,1 mm über die scheibenförmigen Endabschnitte 115 in radialer Richtung hinaus (siehe Fig. 1). Damit wird es möglich, dass der Spulenkörper 100 beispielsweise in einem Umspritzwerkzeug oder einem anderen Werkzeug zum Ummanteln fixiert wird. Dabei werden nicht nur Verdrehungen verhindert. Gleichzeitig können Vorsprünge 150a, 150b auch als Abstandshalter in dem beispielhaften Umspritzwerkzeug dienen, wenn beispielsweise zumindest drei Vorsprünge 150a, 150b entlang der Umfangsrichtung des Spulenkörpers 100 ausgebildet sind. Optional ist es ebenfalls möglich, dass zumindest eine Verdrehsicherung 150b derart ausgebildet wird, dass die Ummantelung eine Nut 331 bildet, wie sie in der Fig. 3A dargestellt ist.

Das Ausführungsbeispiel aus der Fig. 3A und 3B umfasst weiter abgeflachte Abschnitte 250 als Teil der Ummantelung 200. Diese abgeflachten Abschnitte 250 können beispielsweise für eine Handhabung nach dem Ausbilden der Ummantelung 200 genutzt werden. Außerdem können die abgeflachten Abschnitte 250 auch als Beschriftungsfelder dienen, um den induktiven Drehzahlsensor zu beschriften (z.B. mittels Laser). Auf den abgeflachten Abschnitte 150 können dazu dedizierte Beschriftungsfelder vorgesehen sein.

Optional ist ebenfalls ein Dichtungsring 330 in einer Nut eines verbreiterten Abschnittes der Ummantelung 200 ausgebildet, um eine zuverlässige Abdichtung beim Aufsetzen der Schutzhülse zu gewährleisten.

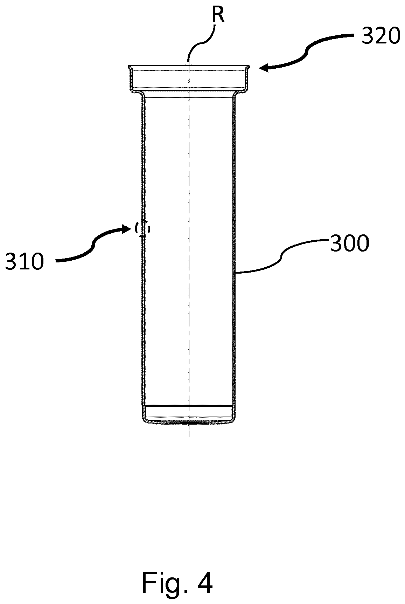

**Fig. 4** zeigt ein Ausführungsbeispiel für die genutzte Schutzhülse 300, die einen trompetenhaft verbreiterten Randbereich 320 aufweist. In dem trompetenhaft verbreiterten Randbereich 320 wird der Dichtungsring 330 platziert (siehe Fig. 3B), um eine Abdichtung des Innenbereiches sicherzustellen. Die Schutzhülse 300 kann beispielsweise durch Verstemmungen 310 an der darunterliegenden Ummantelung 200 befestigt werden. Das Verstemmen kann jedoch ebenfalls an den Plateaubereichen 240 erfolgen, wie sie beispielsweise in der Fig. 3B zu sehen sind.

An dem Endbereich des trompetenhaft verbreiterten Randbereiches 320 können optional Befestigungsmittel vorgesehen sein (in der Fig. 4 nicht zu sehen), die dazu dienen, um die Schutzhülse 300 mit der Ummantelung 200 oder in dem Umspritzwerkzeug zu befestigen bzw. nach dem Umspritzvorgang den induktiven Sensor zusammen mit der Schutzhülse 300 aus dem Werkzeug zu entfernen. Dazu kann beispielsweise ein weiterer Rasthaken oder ein Bajonettverschluss am Rand der Trompetenform ausgebildet sein.

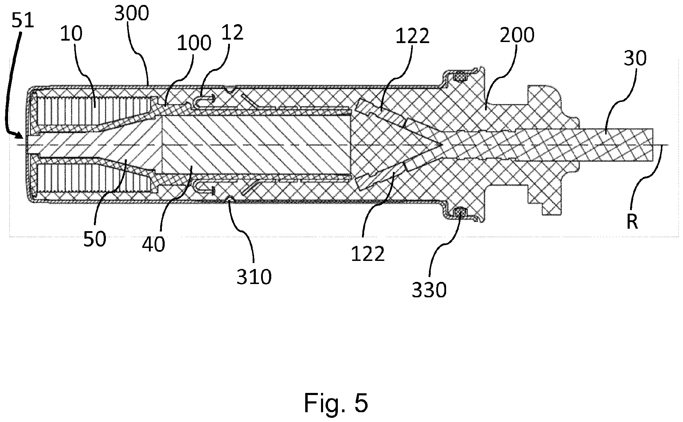

**Fig. 5** zeigt eine Querschnittsansicht eines fertiggestellten induktiven Sensors in der axialen Bauausführung. Die elektrischen Anschlussleitungen 30 laufen parallel zur axialen Achse R in den Sensor hinein, spreizen sich Y-förmig auf, um die Kontaktabschnitte 122 der Stromschiene 120 zu kontaktieren. Die elektrische Verbindung zwischen den elektrischen Anschlussleitungen 30 und den Kontaktabschnitten 122 kann wie auch bei den anderen Ausführungsformen durch ein Verschweißen, Verlöten oder auch ein Crimpen erfolgen.

Die Stromschienen 120 sind wieder beidseitig des Magneten 40 angeordnet und umfassen einen vorderen Kontaktabschnitt 12 für die Spulendrähte aus der Spule 10. Die Stromschienen 120 bilden eine Barriere 170, die eine Umspritzmasse während eines beispielhaften Umspritzvorganges von dem Kontaktbereich 12 der Stromschienen 120 wegführt und so die Kontaktierung zu der Spule 10 schützt. Dadurch wird es möglich den Umspritzvorgang unter einem sehr hohen Druck auszuführen, ohne dabei Gefahr zu laufen, dass eine Beschädigung des elektrischen Kontaktes zu der Spule den Drehzahlsensor unbrauchbar macht.

Die Spule 10 wird durch den Spulenkörper 100 in einem vorderen Wickelbereich gehalten, wobei innerhalb des Spulenhalters 100 der Magnet 40 und ein separater Polkern 50 angeordnet sind. Der Spulenkörper 100 wird zusammen mit den Stromschienen 120 und der Kontaktierung zu den Anschlussleitungen 30 durch eine Ummantelung 200 geschützt (z.B. hermetisch versiegelt). Außerdem wird die Ummantelung 200, die beispielsweise ein Kunststoffmaterial aufweist, über eine Schutzhülse 300 geschützt. Die Schutzhülse 300 kann beispielsweise ein Metall aufweisen, um einen zuverlässigen Schutz vor mechanischen Einflüssen zu bieten. Das stabförmige Ende 51 des Polkernes 50 stößt beispielhaft an die Schutzhülse 300 an, um eine zuverlässige Weiterleitung der Magnetfeldlinien oder eine Änderung durch ein vorbeilaufendes Polrad zu gewährleisten.

Gemäß Ausführungsbeispielen können die Kontaktbereiche 122 flexibel gebogen werden, sodass die Herstellung basierend auf einen universellen Spulenkörper 100 in gleicher Weise durchgeführt werden kann. Sowohl der axialen als auch der radiale Drehzahlsensor kann die gleichen Komponenten nutzen. Im Gegensatz zu konventionellen Drehzahlsensoren sind keine unterschiedlichen Spulenkörper oder Stromschienen für den axialen und den radialen Drehzahlsensor erforderlich. Dies führt zu einer Reduzierung der erforderlichen Teile, einer einfachen Prozessierung und Montage und somit zu einer Reduktion der Kosten.

Obwohl für das Ausbilden der Ummantelung 200 insbesondere ein Umspritzprozess genutzt werden kann, soll die Erfindung nicht auf eine spezifische Ummantelung eingeschränkt werden. Andere Kunststoffmaterialien oder Verfahren können ebenfalls genutzt werden (z.B. ein Vergießen). Das dazu genutzt Werkzeug umfasst vorteilhafterweise einen linear verschiebbaren Tisch mit zwei untere Werkzeughälften und einer oberen Werkzeughälfte. Die zwei unteren Werkzeughälften dienen der Bestückung der zu ummantelnden Komponenten (Spulenkörper mit Spule, Stromschienen etc.) und die obere Werkzeughälfte ist für die Materialzuführung der Ummantelung vorgesehen (z.B. der Umspritzmasse).

Da die Kabellängen von Drehzahlsensoren im Fahrzeugbereich sehr lang sein können (z.B. 4 m und mehr), bietet der linear verschiebbare Tisch gegenüber konventionellen Werkzeugen, die eine Drehbewegung zum Bestücken ausführen, den besonderen Vorteil, dass die Anschlussleitungen/-kabel sich nicht in dem Werkzeug verdrehen oder verfangen können. Dies wiederum hat den Vorteil, dass eine vollautomatische Fertigung möglich ist, da die teilweise langen Anschlusskabel nur linear verschoben werden und dadurch den Herstellungsprozess kaum oder gar nicht behindern.

Vorteile von Ausführungsbeispiele umfassen insbesondere:
- Eine Verdrehsicherung des Spulenkörpers 100 im Werkzeug wird über Vorsprünge am Spulenkörper 100 erreicht, sodass ein Verdrehen während eines beispielhaften Umspritzprozesses sicher verhindert wird. Hierzu können radialpfeilförmige Verdrehsicherungen genutzt werden, die das Verdrehen während des Fertigungsprozesses verhindern und gleichzeitig eine Fixierung bieten. Außerdem sind axiale Schlüsselflächen als Verdrehsicherungen vorgesehen, die neben einer Fixierung ebenfalls eine Verdrehung während des Fertigungsprozesses gewährleisten.

- Die Ummantelung umfasst Rippen für eine Hülsenklemmung mit Plateauflächen, die für eine Verstemmung der Hülse genutzt werden können.
- Außerdem sind in einem Kopfbereich Flächen vorgesehen, die als Datenmatrix-Code genutzt werden können und mittels eines Lasers beschriftet werden können.
- Insbesondere für die radiale Variante werden gefederte Materialauskernung genutzt, die zur Fixierung der Litze beim Umspritzprozess genutzt werden.

### BEZUGSZEICHENLISTE

- 10: Spule/Spulenwindungen
- 12: Drahtkontaktierungen vom Spulendraht
- 30: (elektrische) Anschlussleitungen
- 31,32: Leiter der Anschlussleitung
- 40: Magnetkernes/Magnet
- 50: Polkern
- 51: stabförmiges Ende des Polkerns
- 100: Spulenkörper
- 115: scheibenförmiger Endabschnitt
- 120: Stromschiene(n)
- 122: Kontaktbereich(e)
- 130: Rasthaken
- 150: Verdrehsicherung, Fixierungsmittel
- 150a: pfeilförmige Elemente
- 150b: Stiftelemente
- 160: Materialauskernung
- 170: Barriere
- 200: Ummantelung
- 230: Rippen
- 240: Plateau
- 250: abgeflachte Flächen
- 300: Schutzhülse/Metallhülse
- 310: Verstemmung
- 320: trompetenförmige Randverbreiterung
- 330: O-Ring
- R: axiale Achse

## Patentansprüche

1. Induktiver Drehzahlsensor, der folgende Merkmale aufweist:
- einen Spulenkörper (100) mit einer Spule (10) und Anschlussleitungen (30), die sich bezüglich der Spulenwicklungen zumindest teilweise axial oder radial erstrecken;
- eine Ummantelung (200) aus einem Kunststoffmaterial, die den Spulenkörper zumindest teilweise umschließt; und
- Fixierungsmittel (150, 160) zum Erleichtern eines Ausbildens der Ummantelung (200), wobei die Fixierungsmittel (150, 160) Folgendes umfassen:
eine Verdrehsicherung (150), die von dem Spulenkörper (100) in radialer Richtung hervorsteht und dazu ausgebildet ist, eine Verdrehung des Spulenkörpers (100) beim Ausbilden der Ummantelung (200) relativ zu einem dazu genutzten Werkzeug zu verhindern, wobei die Verdrehsicherung (150) teilweise aus der Ummantelung herausragt oder sich zumindest bis zu einer äußeren Oberfläche der Ummantelung erstreckt,
**dadurch gekennzeichnet, dass**
die Ummantelung (200) äußere Rippen (230) aufweist, die auf einer äußeren Oberfläche ausgebildet sind und für eine Hülsenklemmung einer äußeren Schutzhülse (300) geeignet sind, wobei die Verdrehsicherung (150) ein Teil eines Abschnittes einer Rippe (230) ist.

2. Induktiver Drehzahlsensor nach Anspruch 1, **dadurch gekennzeichnet, dass** die Fixierungsmittel (150, 160) zusätzlich Folgendes umfassen:
für radial sich erstreckende Anschlussleitungen (30), eine Materialauskernung (160) in der Ummantelung (200), wobei die Materialauskernung durch einen Stempel verursacht ist, welcher beim Ausbilden der Ummantelung positioniert wird, um die elektrischen Anschlussleitungen bei dem Ausbilden der Ummantelung (200) in einem Abstand voneinander zu fixieren.

3. Induktiver Sensor nach Anspruch 1 oder Anspruch 2, **dadurch gekennzeichnet, dass**
die Ummantelung (200) zumindest ein Plateau (240) aufweist, wobei das Plateau (240) ausgebildet ist, um eine äußere Schutzhülse (300) mittels einer Verstemmung (310) daran zu fixieren.

4. Induktiver Drehzahlsensor nach einem der vorhergehenden Ansprüche, **gekennzeichnet durch**
eine Schutzhülse (300) mit einer trompetenförmigen Randverbreiterung (320) zum Schutz der Ummantelung (200),
wobei optional ein Dichtungs-O-Ring (330) zwischen der Schutzhülse (300) und der Ummantelung (200) ausgebildet ist, um eine zuverlässige Dichtung zu gewährleisten.

5. Induktiver Sensor nach Anspruch 4,
**dadurch gekennzeichnet, dass**
die trompetenförmige Randverbreiterung (320) Befestigungsmittel aufweist, um die Schutzhülse (300) und die Ummantelung (200) zu befestigen.

6. Induktiver Sensor nach Anspruch 5,
**dadurch gekennzeichnet, dass**
die Befestigungsmittel einen Rasthaken oder einen Bajonett-Verschluss aufweisen.

7. Induktiver Sensor nach einem der vorhergehenden Ansprüche, wobei die Anschlussleitungen (30) sich axial erstrecken,
**dadurch gekennzeichnet, dass**
die Ummantelung (200) abgeflachte Flächen (250) aufweist, zwischen denen die Anschlussleitungen (30) zu dem Spulenkörper (100) verlaufen, um eine Handhabung während des oder nach dem Ausbilden der Ummantelung (200) zu erleichtern und eine weitere Verdrehsicherung bereitzustellen.

8. Induktiver Sensor nach Anspruch 7,
**dadurch gekennzeichnet, dass**
die abgeflachten Flächen (250) eine Beschriftungsfläche aufweisen.

9. Verfahren zur Herstellung eines induktiven Drehzahlsensors, wobei das Verfahren Folgendes umfasst:
- Bereitstellen eines Spulenkörpers (100) mit Spulenwicklungen (10) und Anschlussleitungen (30), die sich bezüglich der Spulenwicklungen (10) zumindest teilweise axial oder radial erstrecken;
- Ausbilden einer Ummantelung (200) aus einem Kunststoffmaterial, die den Spulenkörper (100) zumindest teilweise umschließt; und
- Fixieren zumindest eines Teils des Spulenkörpers (100) während des Ausbildens der Ummantelung (200),
wobei das Fixieren Folgendes umfasst:
- Festhalten des Spulenkörpers (100) in einem zum Ausbilden der Ummantelung (200) genutzten Werkzeug unter Nutzung einer Verdrehsicherung, die von dem Spulenkörper (100) in radialer Richtung hervorsteht, um durch das genutzte Werkzeug gehalten zu werden, und wobei das Ausbilden der Ummantelung Folgendes umfasst:
- Ausbilden von äußeren Rippen (230) der Ummantelung (200), die auf einer äußeren Oberfläche ausgebildet und für eine Hülsenklemmung einer äußeren Schutzhülse (300) geeignet sind, derart dass die Verdrehsicherung (150) ein Teil eines Abschnittes einer Rippe (230) ist.

10. Verfahren nach Anspruch 9, wobei das Fixieren zusätzlich Folgendes umfasst:
- für radial sich erstreckende Anschlussleitungen (30), Einführen eines Stempels zwischen den elektrischen Anschlussleitungen (30) während des Ausbildens der Ummantelung (200), um die Anschlussleitungen (30) in einem vorbestimmten Abstand voneinander zu fixieren.

11. Verfahren nach Anspruch 9 oder Anspruch 10, wobei zum Ausbilden der Ummantelung (200) ein Werkzeug genutzt wird, das einen linear verschiebbaren Tisch mit zumindest zwei unteren Werkzeugteilen und einem oberen Werkzeugteil aufweist, um ein Bestücken der Spulenkörper (100) durch ein lineares Verschieben zu ermöglichen.

12. Verfahren nach einem der Ansprüche 9 bis 11, wobei der Spulenkörper (100) zur elektrischen Kontaktierung der Spule (10) zwei Stromschienen (120) umfasst, die jeweils eine Barriere (170) zwischen einer Drahtkontaktierung (12) der Spule (10) und einem Kontaktbereich (122) für die Anschlussleitungen (30) umfassen, und wobei das Ausbilden der Ummantelung (200) ein Umspritzen der Spulenkörpers (100) umfasst und das Umspritzen derart ausgeführt wird, dass die Barrieren (170) ein Umlenken einer genutzten Umspritzmasse bei dem Umspritzen bewirken.

## Claims

1. Inductive rotational speed sensor which comprises the following features:
- a coil body (100) having a coil (10) and connecting lines (30) which in terms of the coil windings at least partially extend axially or radially;
- a casing (200) which is of a plastics material and at least partially encloses the coil body; and
- fixing means (150, 160) for facilitating a configuration of the casing (200),
wherein the fixing means (150, 160) comprise the following:
an anti-twist safeguard (150) which projects from the coil body (100) in the radial direction and is configured so as to prevent the coil body (100) rotating relative to a tool used for configuring the casing (200) while the latter is being configured, wherein the anti-twist safeguard (150) partially protrudes from the casing, or extends at least up to an external surface of the casing,
**characterized in that**
the casing (200) has external ribs (230) which are configured on an external surface and are suitable for clamping a sleeve of an external protective sleeve (300), wherein the anti-twist safeguard (150) is part of a portion of a rib (230).

2. Inductive rotational speed sensor according to Claim 1,
**characterized in that**
the fixing means (150, 160) additionally comprise the following:
for radially extending connecting lines (30), a material core clearance (160) in the casing (200), wherein the material core clearance is caused by a die which is positioned when configuring the casing, so as to fix the electrical connecting lines at a mutual spacing when configuring the casing (200).

3. Inductive sensor according to Claim 1 or Claim 2,
**characterized in that**
the casing (200) has at least one plateau (240), wherein the plateau (240) is configured for fixing thereon an external protective sleeve (300) by means of caulking (310).

4. Inductive rotational speed sensor according to one of the preceding claims, **characterized by**
a protective sleeve (300) having a trumpet-shaped peripheral widening (320) for protecting the casing (200),
wherein an O-ring seal (330) is optionally configured between the protective sleeve (300) and the casing (200) so as to guarantee reliable sealing.

5. Inductive sensor according to Claim 4,
**characterized in that**
the trumpet-shaped peripheral widening (320) has fastening means for fastening the protective sleeve (300) and the casing (200).

6. Inductive sensor according to Claim 5,
**characterized in that**
the fastening means have a latching hook or a bayonet mount.

7. Inductive sensor according to one of the preceding claims, wherein the connecting lines (30) extend axially,
**characterized in that**
the casing (200) has complanate faces (250), the connecting lines (30) to the coil body (100) running therebetween, so as to facilitate handling during or after the configuration of the casing (200) and to provide a further anti-twist safeguard.

8. Inductive sensor according to Claim 7,
**characterized in that**
the complanate faces (250) have a labeling area.

9. Method for producing an inductive rotational speed sensor,
wherein the method comprises the following:
- providing a coil body (100) having coil windings (10) and connecting lines (30) which in terms of the coil windings (10) at least partially extend axially or radially;
- configuring a casing (200) which is of a plastics material and at least partially encloses the coil body (100); and
- fixing at least part of the coil body (100) while configuring the casing (200),
wherein the fixing comprises the following:
- firmly holding the coil body (100) in a tool utilized for configuring the casing (200) while utilizing an anti-twist safeguard which projects from the coil body (100) in the radial direction so as to be held by the utilized tool, and
wherein the configuration of the casing comprises the following:
- configuring external ribs (230) of the casing (200) which are configured on an external surface and are suitable for clamping a sleeve of an external protective sleeve (300), such that the anti-twist safeguard (150) is part of a portion of a rib (230).

10. Method according to Claim 9,
wherein
the fixing additionally comprises the following:
- for radially extending connecting lines (30), introducing a die between the electrical connecting lines (30) while configuring the casing (200) so as to fix the connecting lines (30) at a predefined mutual spacing.

11. Method according to Claim 9 or Claim 10,
wherein
a tool which has a table that is displaceable in a linear manner and has at least two lower tool parts and one upper tool part, so as to enable the coil bodies (100) to be populated by a linear displacement, is utilized for configuring the casing (200).

12. Method according to one of Claims 9 to 11, wherein the coil body (100) for electrically contacting the coil (10) has two conductor rails (120) which comprise in each case one barrier (170) between a wire contact (12) of the coil (10) and a contact region (122) for the connecting lines (30),
and wherein
the configuration of the casing (200) comprises overmolding of the coil body (100), and the overmolding is carried out in such a manner that the barriers (170) cause a non-utilized overmolding compound to be deflected when overmolding.

## Revendications

1. Capteur inductif de vitesse de rotation, qui a les caractéristiques suivantes :
- un corps (100) de bobine, comprenant une bobine (10) et des lignes (30) de connexion, qui s'étendent, par rapport aux enroulements de bobine, au moins en partie axialement ou radialement ;
- une enveloppe (200) en une matière plastique, qui entoure au moins en partie le corps de bobine ; et
- des moyens (150, 160) d'immobilisation pour faciliter la constitution de l'enveloppe (200),
dans lequel les moyens (150, 160) d'immobilisation comprennent ce qui suit :
une sécurité (150) à la torsion, qui fait saillie du corps (100) de bobine dans la direction radiale et qui est constituée pour empêcher une torsion du corps (100) de bobine, lors de la formation de l'enveloppe (200), par rapport à un outil utilisé à cet effet, dans lequel la sécurité (150) à la torsion fait saillie en partie de l'enveloppe ou s'étend au moins jusqu'à une surface extérieure de l'enveloppe,
**caractérisé en ce que**
l'enveloppe (200) a des nervures (230) extérieures, qui sont constituées sur une surface extérieure et qui conviennent au serrage d'un manchon (300) extérieur de protection, la sécurité (150) à la torsion étant une partie d'un tronçon d'une nervure (230).

2. Capteur inductif de vitesse de rotation suivant la revendication 1,
**caractérisé en ce que**
les moyens (150, 160) de fixation comprennent en outre ce qui suit :
pour des lignes (30) de connexion s'étendant radialement, un enlèvement (160) d'un noyau de matière dans l'enveloppe (200), l'enlèvement du noyau de matière étant provoqué par un poinçon, qui est mis en position lors de la formation de l'enveloppe, afin de fixer les lignes de connexion électriques à distance les unes des autres lors de la formation de l'enveloppe (200).

3. Capteur inductif de vitesse de rotation suivant la revendication 1 ou la revendication 2,
**caractérisé en ce que**
l'enveloppe (200) a au moins un plateau (240), le plateau (240) étant constitué pour y immobiliser un manchon (300) extérieur de protection au moyen d'un matage (310).

4. Capteur inductif de vitesse de rotation suivant l'une des revendications précédentes,
**caractérisé par**
un manchon (300) de protection ayant un élargissement (320) de bord en forme de trompette pour la protection de l'enveloppe (200), dans lequel, facultativement, un joint (330) torique d'étanchéité est constitué entre le manchon (300) de protection et l'enveloppe (200) pour assurer une étanchéité fiable.

5. Capteur inductif de vitesse de rotation suivant la revendication 4,
**caractérisé en ce que**
l'élargissement (320) de bord en forme de trompette a des moyens de fixation pour fixer le manchon (300) de protection et l'enveloppe (200).

6. Capteur inductif de vitesse de rotation suivant la revendication 5,
**caractérisé en ce que**
les moyens de fixation comportent un crochet d'encliquetage ou une fermeture à baïonnette.

7. Capteur inductif de vitesse de rotation suivant l'une des revendications précédentes, dans lequel les lignes (30) de connexion s'étendent axialement
**caractérisé en ce que**
l'enveloppe (200) a des surfaces (250) aplaties, entre lesquelles les lignes (30) de connexion vont au corps (100) de bobine, pour faciliter une manipulation pendant ou après la formation de l'enveloppe (200) et pour disposer d'une sécurité supplémentaire à la torsion.

8. Capteur inductif de vitesse de rotation suivant la revendication 7,
**caractérisé en ce que**
les surfaces (250) aplaties comportent une surface d'inscription.

9. Procédé de fabrication d'un capteur inductif de vitesse de rotation,
dans lequel le procédé comprend ce qui suit :
- on se procure un corps (100) de bobine ayant des enroulements (10) de bobine et des lignes (30) de connexion, qui s'étendent par rapport aux enroulements (10) de bobine, au moins en partie axialement ou radialement ;
- on forme une enveloppe (200) en une matière plastique, qui entoure au moins en partie le corps (100) de bobine ; et
- on immobilise au moins une partie du corps (100) de bobine pendant la formation de l'enveloppe (200),
dans lequel l'immobilisation comprend ce qui suit :
- on maintient le corps (100) de bobine dans un outil utilisé pour la formation de l'enveloppe (200) en utilisant une sécurité à la torsion, qui est en saillie du corps (100) de bobine dans la direction radiale, pour qu'il soit maintenu par l'outil utilisé, et
dans lequel la formation de l'enveloppe comprend ce qui suit :
- on forme des nervures (230) extérieures de l'enveloppe (200), qui sont constituées sur une surface extérieure et qui conviennent pour le serrage d'un manchon (300) extérieur de protection, de manière à ce que la sécurité (150) à la torsion soit une partie d'un tronçon d'une nervure (230).

10. Procédé suivant la revendication 9,
dans lequel l'immobilisation comprend en outre ce qui suit :
- pour des lignes (30) de connexion s'étendant radialement, introduction d'un poinçon entre les lignes (30) de connexion électriques pendant la formation de l'enveloppe (200) pour immobiliser les lignes (30) de connexion à une distance définie à l'avance les unes des autres.

11. Procédé suivant la revendication 9 ou la revendication 10, dans lequel
pour former l'enveloppe (200), on utilise un outil, qui a une table pouvant coulisser linéairement et ayant au moins deux parties inférieures d'outil et une partie supérieure d'outil, afin de rendre possible d'équiper le corps (100) de bobine par un déplacement linéaire.

12. Procédé suivant l'une des revendications 9 à 11, dans lequel le corps (100) de bobine comprend, pour la mise en contact électrique de la bobine (10), deux barres (120) de courant, qui comprennent chacune une barrière (170) entre une mise en contact (12) par fil de la bobine (10) et une zone (122) de contact pour les lignes (30) de connexion,
et dans lequel
la formation de l'enveloppe (200) comprend un surmoulage du corps (100) de bobine et on effectue le surmoulage de manière à ce que les barrières (170) provoquent, lors du surmoulage, une déviation d'une masse de surmoulage utilisée.
